# EUROPEAN PATENT APPLICATION

(11) **EP 4 431 556 A1**
(43) Date of publication of application: **18.09.2024**
(21) Application number: 22892719.0
(22) Date of filing: 07.11.2022
(51) Int. Cl.: C08J 11/12, B09B 3/40

(54) **WASTE SOLAR CELL PROCESSING METHOD**

(30) Priority: 12.11.2021 JP 2021185122
(71) Applicant: Tokuyama Corporation, Shunan-shi, Yamaguchi 745-8648 (JP)
(72) Inventor: YAMASHITA Takeharu, Shunan-shi, Yamaguchi 745-8648 (JP); INOUE Daisuke, Shunan-shi, Yamaguchi 745-8648 (JP)
(74) Representative: Dehns
(86) International application number: PCT/JP2022/041301
(87) International publication number: WO 2023/085220

(57) **Abstract**

Provided is a method for efficiently processing a waste solar cell.

A method for continuously processing a waste solar cell, the method including a heating step of heating a solar cell module (C) including a resin back sheet and a sealing resin layer in a pyrolysis furnace to melt and oxidatively decompose a resin component included in the solar cell module (C), wherein in the heating step, in a state in which the solar cell module (C) is placed above a porous ceramic support (A) so as to be separated from the porous ceramic support (A), and the porous ceramic support (A) is stacked on a porous material (B) supporting a transition metal oxide, hot air is sent from a porous material (B) side to insides of the porous material (B) and the porous ceramic support (A) and to a gap between the solar cell module (C) and the porous ceramic support (A).

## Description

### Technical Field

The present invention relates to a method for processing a waste solar cell. More specifically, the present invention relates to a processing method for efficiently removing resin components such as a back sheet and a sealing resin layer from a solar cell module, and recovering valuable materials such as a conductive material and an aluminum frame derived from glass, cells, and electrodes.

### Background Art

Toward the realization of a low-carbon society, the acceleration of CO₂ reduction by utilizing renewable energy such as solar power generation is about to progress. While the introduction of solar power generation has progressed significantly, problems of recycling at the time of disposal of solar cell modules have been pointed out.

The structure of a general solar cell module has three layers, tempered glass on the front surface, a sealing resin layer on the inside, and a back sheet on the back surface. An electric wire (interconnector) connecting cells is wired in the sealing resin layer. The sealing resin is required to have properties such as transparency, flexibility, adhesiveness, tensile strength, and weather resistance, and an ethylene-vinyl acetate copolymer (hereinafter abbreviated as "EVA") is generally used as the sealing resin. The sealing resin serves to bond the tempered glass, the cells, and the back sheet by heating and pressurizing.

There has been proposed a technique for recycling a solar cell module by heating the solar cell module by a furnace such as an electric furnace under an oxidizing atmosphere to thermally decompose EVA to remove a sealing material and separate a cell section and a glass substrate.

The present applicant has also proposed a processing method for recovering a valuable material from a solar cell module, in which the solar cell module is placed on a porous molded body made of a heat-resistant material supporting a transition metal oxide as a catalyst with a back sheet surface facing downward, the solar cell module is heated in a heating furnace under an oxidizing atmosphere having an oxygen concentration of 15% or more to melt a resin component, and then the resin component is combusted (see Patent Literature 1).

### Citation List

### Patent Literature

Patent Literature 1: WO 2020/031661 A

### Summary of Invention

### Technical Problem

When the entire module is heated on the porous molded body as in Patent Literature 1, there is a problem that the processing time is prolonged because the temperature rise is moderate. On the other hand, in order to reduce the processing cost, it is efficient to increase the number of sheets to be processed per unit time, and it is necessary to shorten the processing time. However, when the processing speed is increased by increasing the temperature in a pyrolysis furnace, there arises a new problem that the cost such as fuel cost is increased.

### Solution to Problem

The present inventors have conducted diligent studies to solve the above problems. As a result, the present inventors have found that when an entire module is heated above a porous molded body, a predetermined gap is provided between the porous molded body and the module, and hot air is sent from a lower portion of the porous molded body, so that it is possible to speed up a temperature rise of the entire module, improve a processing speed, and shorten a processing time, thereby completing the present invention.

That is, configurations of the present invention are as follows.
[1] A method for continuously processing a waste solar cell, the method including a heating step of heating a solar cell module (C) including a resin back sheet and a sealing resin layer in a pyrolysis furnace to melt and oxidatively decompose a resin component included in the solar cell module (C), wherein
   in the heating step, in a state in which the solar cell module (C) is placed above a porous ceramic support (A) so as to be separated from the porous ceramic support (A), and the porous ceramic support (A) is stacked on a porous material (B) supporting a transition metal oxide, hot air is sent from a porous material (B) side to insides of the porous material (B) and the porous ceramic support (A) and to a gap between the solar cell module (C) and the porous ceramic support (A).
[2] The method for processing a waste solar cell according to [1], wherein the solar cell module (C) and the porous ceramic support (A) are separated from each other by installing a spacer member between the porous ceramic support (A) and the solar cell module (C) or installing, at an upper part of the pyrolysis furnace, a lifting member for lifting the solar cell module (C).
[3] The method for processing a waste solar cell according to [1] or [2], wherein the gap between the solar cell module (C) and the porous ceramic support (A) is in a range of 3 to 50 mm.
[4] The method for processing a waste solar cell according to any one of [1] to [3], wherein the number of cells on each of surfaces of the porous ceramic support (A) and the porous material (B) is in a range of 5 to 50 pixels per inch (hereinafter abbreviated as "ppi").
[5] The method for processing a waste solar cell according to any one of [1] to [4], wherein a network structure for preventing falling is installed under the solar cell module (C).
[6] The method for processing a waste solar cell according to any one of [1] to [5], wherein a valuable material is recovered after the heating step.

### Advantageous Effects of Invention

In the present invention, since heat can be efficiently transferred, the speed at which a waste solar cell is processed can be improved, the processing time can be shortened, and a reusable valuable material can be efficiently recovered.

### Brief Description of Drawings

Fig. 1 is a schematic diagram illustrating one embodiment of the present invention.
Fig. 2 is a schematic diagram illustrating another embodiment of the present invention.
Fig. 3 is a schematic diagram illustrating still another embodiment of the present invention.
Fig. 4 is a graph illustrating changes in temperature at the center under a back sheet of a solar cell module in Examples 1 to 3 and Comparative Example 1.
Fig. 5 is a graph illustrating changes in temperature at the center under a back sheet of a solar cell module in Examples 4 to 6.

### Description of Embodiments

Hereinafter, the present invention will be described in detail.

A method for processing a waste solar cell according to the present invention is a method for continuously processing a waste solar cell, the method including a heating step of heating a solar cell module (C) including a resin back sheet and a sealing resin layer in a pyrolysis furnace to melt and oxidatively decompose a resin component included in the solar cell module (C).

In the heating step, in a state in which the solar cell module (C) is placed above a porous ceramic support (A) so as to be separated from the porous ceramic support (A), and the porous ceramic support (A) is stacked on a porous material (B) supporting a transition metal oxide, hot air is sent from a porous material (B) side to insides of the porous material (B) and the porous ceramic support (A) and to a gap between the solar cell module (C) and the porous ceramic support (A).

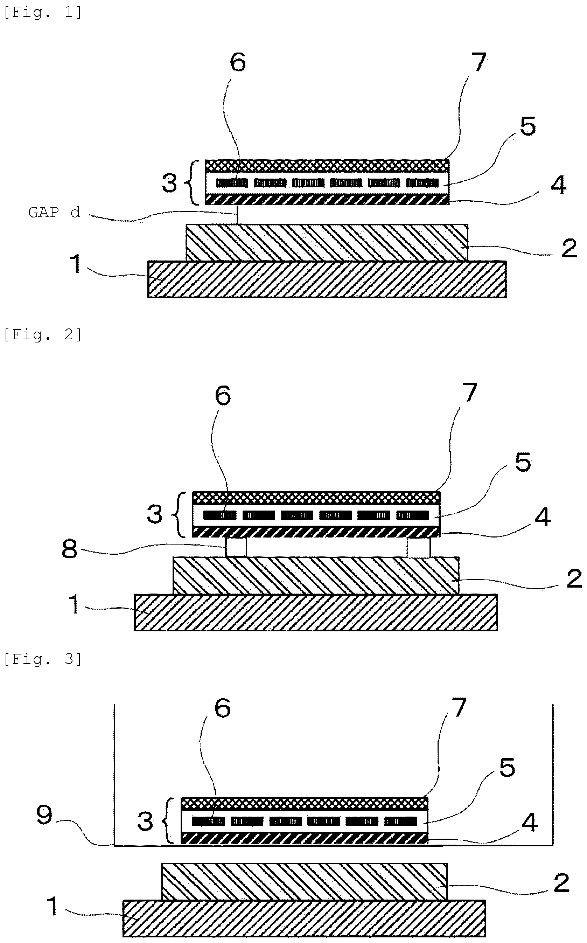

Fig. 1 illustrates an embodiment of the present invention. In Fig. 1, reference numeral 1 denotes the porous material (B) supporting the transition metal oxide, reference numeral 2 denotes the porous ceramic support (A), and reference numeral 3 denotes the solar cell module (C), while reference numeral 4 denotes the back sheet, reference numeral 5 denotes the sealing resin layer, reference numeral 6 denotes a cell, and reference numeral 7 denotes tempered glass, which constitute the solar cell module 3. A predetermined gap d is provided between the porous ceramic support 2 and the solar cell module 3. In one aspect of the present invention, cells 6 and the tempered glass 7 are recovered as valuable materials. Although not illustrated, substances, such as a metal and a metal oxide, constituting components such as electrodes and a reflective film are also recovered as valuable materials. The surface glass functions as a surface protective material.

### <Solar Cell Module 3>

As the solar cell module 3 applicable to the present invention, any solar cell module can be utilized as long as it is not of a double-sided glass type and has the resin back sheet 4. Specific examples thereof include monocrystalline silicon solar cells, polycrystalline silicon solar cells, amorphous silicon solar cells, heterojunction solar cells, CIS solar cells, CIGS solar cells, and CdTe solar cells.

In the solar cell module 3, although not illustrated, usually, for example, light-transmissive electrodes, linear electrodes, or ladder-like electrodes or chain-like electrodes on which a metal foil or a metal ribbon serving as a bus bar is stacked are used as the electrodes. Examples of the metals include silver, copper, and aluminum. In addition, a transparent electrode containing a conductive oxide as a main component may be provided. As the conductive oxide, it is also possible to use one or more kinds of transparent conductive films selected from the group consisting of an indium tin oxide (ITO), an aluminum-doped zinc oxide (AZO), a boron-doped zinc oxide (BZO), a gallium-doped zinc oxide (GZO), an indium-doped zinc oxide (IZO), an aluminum gallium oxide (AGO), a titanium-doped indium oxide (ITiO), an indium gallium zinc oxide (IGZO), and a hydrogen-doped indium oxide (In₂O₃).

The solar cell module 3 is configured to seal the plurality of cells 6 with the sealing resin layer 5 between the tempered glass 7 and the back sheet 4. As the sealing resin, a thermoplastic resin such as ethylene vinyl acetate (EVA), a polyvinyl butyral resin (PVB), or a polyolefin resin is used. The cells 6 are sealed by laminating the cells 6 with a sheet made of the sealing resin. The sealing resin layer 5 may contain a coloring material such as a white pigment. The white pigment such as a titanium oxide has a function of reflecting sunlight to increase light incident on the solar cell module 3. Such a white pigment may be kneaded in a sealing resin or a layer containing a white pigment may be stacked to form the sealing resin layer 5.

The back sheet 4 is a sheet-like back surface protective material, and a base film of EVA or a polyethylene terephthalate resin, a film such as a stacked film of the base film and a weather-resistant fluorine polymer film such as polyvinyl fluoride (PVF) is used.

Furthermore, although not illustrated, an aluminum frame may be attached as a frame in order to protect the peripheral portion of the solar cell module 3. The aluminum frame may be removed before thermal decomposition, or may be removed after thermal decomposition in order to reduce the possibility that glass is broken at the time of removal, due to the advantage that it is not necessary to cut the porous ceramic support 2 according to the size of the aluminum frame and the operation becomes simple. In addition, a reflective film may be provided on the back surface opposite to the sunlight incident surface of the solar cell module as necessary for improving the light receiving efficiency of the cells, and specific examples of the reflective film include a metal film made of metal such as aluminum or silver.

### <Heating Step>

In the heating step in the processing method of the present invention, the solar cell module 3 having the resin back sheet 4 and the sealing resin layer 5 is heated in the pyrolysis furnace to melt and oxidatively decompose the resin component included in the solar cell module 3. This oxidative decomposition usually involves combustion of the resin component.

In the heating step, the solar cell module 3 is placed above the porous ceramic support 2 with a predetermined gap therebetween, and the porous ceramic support 2 is moved in the furnace from the inlet toward the outlet of the pyrolysis furnace in a state of being placed on the porous material 1 supporting the transition metal oxide. In this case, it is preferable to cause the solar cell module 3 to face the porous ceramic support 2 with the back sheet 4 facing downward from the viewpoint of recovery of materials such as the valuable materials.

In the heating step of the present invention, hot air is blown from the porous material 1 side. The hot air passes through pores of the porous material 1 and the porous ceramic support 2, reaches the gap with the solar cell module 3, collides with the solar cell module 3, and diffuses into the gap d.

In addition, in order to increase the processing efficiency, it is preferable to continuously move a plurality of solar cell modules 3 so that a plurality of solar cell modules 3 heated in the pyrolysis furnace are present. Note that in performing heat treatment on an object to be processed including the solar cell module 3, the porous ceramic support 2, and the porous material 1, the object to be processed may be put into, for example, an iron lattice tray in order to prevent the solar cell module 3, the porous ceramic support 2, and the porous material 1 from being misaligned or being turned over in a movement in the furnace.

The gap d can be provided, for example, by installing a spacer member 8 between the porous ceramic support 2 and the solar cell module 3 as illustrated in Fig. 2, or by installing a lifting member 9 for lifting the solar cell module 3 at an upper part of the pyrolysis furnace as illustrated in Fig. 3.

The shape and form of the spacer member 8 are not particularly limited as long as a predetermined gap can be provided, and may be, for example, a lattice type, a sphere, a rod, or another type, and the spacer member 8 may be placed on the porous ceramic support 2 such that the solar cell module 3 does not bend.

The lifting member 9 is not particularly limited as long as it is configured to lift the solar cell module 3 from above, and a material such as a basket material can also be used. These members are usually made of a refractory material that does not deform or react during heating, and are made of, for example, an inorganic material such as stainless steel, silica, or alumina.

The gap d between the solar cell module 3 and the porous ceramic support 2 is preferably in a range of 3 to 50 mm, preferably 4 to 40 mm, and more preferably 5 to 15 mm. The gap d is selected within the above range according to the air permeability of the porous ceramic support 2 and the porous material 1 and the amount of hot air to be sent. It is to be noted that "to" represents not falling below and not exceeding unless otherwise specified.

Resin components, such as EVA and PET, constituting the back sheet 4 and the sealing resin layer 5 are melted during the heating step, and then flow out toward the porous ceramic support 2 by the action of gravity.

Since the porous ceramic support 2 is porous, the resin components that have been melted and flowed down have a large contact area with the atmosphere in the heating furnace, and can capture components such as a white pigment contained as a solid content.

The resin components that have been melted and flowed down pass through the porous ceramic support 2, reach the porous material 1, are oxidatively decomposed by the supported transition metal oxide, and the decomposed components are combusted. With this configuration, it is possible to suppress the generation of "soot".

For the oxidative decomposition, the atmosphere in the heating furnace in the heating step is desirably controlled to have an oxygen concentration of 6 vol% or more and less than 15 vol%. In this atmosphere, the resin components can be gently and stably combusted and removed, which is desirable.

The temperature of the pyrolysis furnace is appropriately determined according to the resin constituting the back sheet 4 and the sealing resin layer 5, and is preferably in a range of 425 to 575°C. When the temperature is 425°C or higher, the temperature is higher than the thermal decomposition temperature of the resin used for the back sheet 4 and the sealing resin layer 5, and the combustion occurs. Furthermore, when the temperature is 575°C or lower, rapid combustion can be suppressed, and the glass of the solar cell module 3 can be prevented from being damaged.

The pyrolysis furnace is not particularly limited as long as it is a pyrolysis furnace, such as a gas furnace or an electric furnace, that enables the above-described temperature to be obtained, and into which the object to be processed including the porous material 1, the porous ceramic support 2, and the solar cell module 3 can be loaded, and a known pyrolysis furnace can be used.

Examples of a method of sending hot air include a method of heating an oxygen-containing gas with a burner such as a gas burner and sending the gas from the porous material 1 side. Although not particularly limited as long as the temperature in the furnace can be obtained, for example, in the case of a gas furnace, the entire inside of the furnace may be heated together with air supply in this case.

In the method according to the present invention, it is preferable that after the heating step, a valuable material that remains on the porous ceramic support 2 be recovered. The valuable material is at least one selected from the group consisting of the glass, the cells, a conductive material used for the electrodes, the aluminum frame, and another material.

In the method of the present invention, a network structure for preventing falling may be installed under the solar cell module (C). For example, it is also effective that a network structure such as a wire mesh is installed between the solar cell module 3 and the porous ceramic support 2, and the remaining valuable material is recovered together with the wire mesh even if the resin is melted and moves onto the porous ceramic support 2. As a result, from the processed object after the resin is melted and combusted, the valuable material can be efficiently recovered without disassembly of the glass, the cells, and other materials.

### <Porous Ceramic Support 2>

The porous ceramic support 2 applicable to the present invention can be used without any limitation as long as it is stable at the above-described temperature (specifically, about 425°C to 575°C) and has a porous structure. Specific examples of the material thereof include stable and common ceramic materials such as alumina, zirconia, silicon nitride, silicon carbide, cordierite, ferrite, barium titanate, lead zirconate titanate, forsterite, zircon, mullite, steatite, and aluminum nitride.

The pore size of the porous ceramic support 2 is not particularly limited, but is preferably about 0.1 to 5 mm such that EVA, PET and another component easily permeate into the porous ceramic support 2 when they are melted at around 450°C. The number of cells on the surface is not particularly limited, either, but is desirably in a range of 5 to 50 pixels per inch (hereinafter abbreviated as "ppi"). The porosity is not limited at all, but is desirably about 50 to 95%. In particular, one having a three-dimensional skeleton structure with continuous pores can be suitably used.

The shape of the porous ceramic support 2 is not particularly limited, but in order to prevent the resin used in the solar cell module 3 from falling from the porous ceramic support 2, a plate-shaped one can be suitably used. Furthermore, from the viewpoint that the generation of "soot" due to leakage of a melted resin component to the outside of the porous ceramic support 2 can be suppressed, the size (area) of the surface of the porous ceramic support 2 above which the back sheet 4 is placed is preferably as large as possible within the range that the surface can fit in the aluminum frame in a case where the aluminum frame is not removed, and in a case where the aluminum frame is removed from the solar cell module 3, it is preferably larger than the bottom area of the back sheet 4.

There is no limitation on the thickness of the porous ceramic support 2, but one having a thickness of about 10 to 60 mm is suitable.

As the porous ceramic support 2 as described above, a product, which is called a ceramic foam, a ceramic filter, or a ceramic foam filter that is made of alumina, silicon carbide, and cordierite, is suitable.

In processing the waste solar cell by using the method according to the present invention, the solar cell module 3 is placed above the porous ceramic support 2 with the back sheet 4 surface facing downward. By allowing the back sheet 4 surface to face downward, the resin components constituting the back sheet 4 and the sealing resin layer 5 are melted due to heating, and then flow out toward the porous ceramic support 2 due to the action of gravity.

Since the porous ceramic support 2 is porous, the resin that has flowed down has a large contact area with the atmosphere in the pyrolysis furnace. Therefore, the efficiency of combustion by further heating increases, and the generation of "soot" can be suppressed.

### <Porous Material 1>

In the porous material 1 supporting the transition metal oxide that is used in the present invention, the transition metal oxide has an ability to adsorb oxygen in the oxidized state and to decompose an organic compound containing an aromatic ring that has been produced by oxidatively decomposing an aromatic resin during combustion. By using such a porous material 1, the generation of "soot" can be suppressed.

As the transition metal oxide, oxides of, for example, scandium, titanium, vanadium, chromium, manganese, iron, cobalt, nickel, copper, zinc, yttrium, zirconium, niobium, molybdenum, technetium, ruthenium, rhodium, palladium, silver, cadmium, lanthanum, cerium, praseodymium, neodymium, promethium, samarium, europium, gadolinium, terbium, dysprosium, holmium, erbium, thulium, ytterbium, lutetium, hafnium, tantalum, tungsten, rhenium, osmium, iridium, platinum, gold, and mercury can be used without any limitations.

Among the above, preferable examples include oxides of first transition elements including scandium, titanium, vanadium, chromium, manganese, iron, cobalt, nickel, and copper; oxides of second transition elements including yttrium, zirconium, niobium, molybdenum, technetium, ruthenium, rhodium, palladium, and silver; and oxides of third transition elements including lanthanum, cerium, praseodymium, neodymium, promethium, samarium, europium, gadolinium, terbium, dysprosium, holmium, erbium, thulium, ytterbium, lutetium, hafnium, tantalum, tungsten, rhenium, osmium, iridium, platinum, and gold, and more preferably, transition metal oxides such as a rutile or anatase type titanium (IV) oxide, a chromium (III) oxide, an iron (III) oxide, and a copper (II) oxide can be suitably utilized. These may be in the state of composite oxides.

The porous material 1 may be any material as long as it is stable at the combustion temperature of the resin component as with the porous ceramic support 2, and examples thereof include the same materials. The shape of the porous material 1 is not particularly limited, and is not particularly limited as long as it can be a so-called catalyst carrier. However, the porous material 1 is more preferably a plate-shaped porous molded body that is similar to the porous ceramic support 2 above which the solar cell module 3 is placed.

As a method of having the porous material 1 support the transition metal oxide, a known technique can be used without any limitations. Specifically, a method of impregnating the porous material 1 in a solution containing the transition metal oxide by using, for example, dip coating, wash coating, spray coating, or spin coating, and having the porous material 1 support the transition metal oxide is common. After that, the solution is removed by heating the porous material to the boiling point of the solution or higher. This is the simplest method. Alternatively, a thermal spraying technique in which the melted transition metal oxide is sprayed onto the porous material 1 may be utilized.

In the present invention, the porous ceramic support 2 is placed on the porous material 1 supporting the transition metal oxide.

As the size of the porous material 1, from the viewpoint of stability of the object to be processed including the solar cell module 3, it is preferable that a loading surface of the porous material 1 have an area that is similar to the bottom area of the porous ceramic support 2. The thickness of the porous material 1 is suitably about 10 to 60 mm. Similarly to the porous ceramic support 2, the number of cells on the surface of the porous material 1 is preferably in a range of 5 to 50 pixels per inch (hereinafter abbreviated as "ppi"). The porosity is not limited at all, but is desirably about 50 to 95% as with the porous ceramic support 2.

In particular, one having a three-dimensional skeleton structure with continuous pores can be suitably used.

### Examples

Hereinafter, embodiments of a recovery method of the present invention will be described with reference to Examples, but the present invention is not limited to the following embodiments and examples, and can be arbitrarily changed and implemented without departing from the gist of the present invention.

A shelf board used in the present invention may have any aspect as long as it has heat resistance and the loaded solar cell module 3, porous ceramic support 2, and porous material 1 can be heated, and examples thereof include ceramic shelf boards and SUS wire meshes.

### [Example 1]

As the solar cell module 3, a polycrystalline silicon solar cell "KD270HX-BPEFMS" manufactured by KYOCERA Corporation was used for evaluation. The electrodes and the aluminum frame on the back sheet 4 were removed before the heat treatment step.

A ceramic filter that serves as the porous ceramic support 2 and has 10 ppi and 300 mm × 400 mm × 15 mmt (product of Nippon Crucible Co., Ltd. (material: silicon carbide)) was used (this is referred to as a porous ceramic support (A-1)).

As the porous material 1 supporting the catalyst, a ceramic filter (product of Nippon Crucible Co., Ltd. (material: silicon carbide)) with 10 ppi and 300 mm × 400 mm × 45 mmt was used. A chromium (III) oxide (manufactured by FUJIFILM Wako Pure Chemical Corporation) was stirred while being suspended in water on this ceramic filter, and the ceramic filter was immersed to perform dip coating, and was dried at 450°C to prepare a chromium-supported porous material (B-1). The mass of the chromium-supported porous material (B-1) was 2300 g before the coating and was 2859 g after the coating and the drying.

An iron tray having a grid-like bottom of 2,100 mm × 1,210 mm × 50 mm was manufactured, and this chromium-supported porous material (B-1) was placed. The porous ceramic support (A-1) was placed thereon. Further, a stainless steel lattice spacer (interval between grids: 160 mm, height: 10 mm) as the spacer member 8 was placed on the porous ceramic support (A-1) to provide a predetermined interval, and the solar cell module 3 was placed on the lattice spacer such that the back sheet 4 was on the lower side.

A gas furnace was used as the pyrolysis furnace. As the gas furnace, a hot air circulation type heat treatment device of a cyclically fed chain-blow type that has a furnace length of 5,400 mm, a furnace width of 2,300 mm, and a furnace height of 280 mm was used. As a gas burner unit, a metallic burner MJPE-200K was used to burn and heat a mixed gas of LP gas and air. The heated mixed gas was supplied by squeezing with a slit from the lower side of the pyrolysis furnace section using "6.0-LF limit load fan" (450 m³/min, 2.0 kPa, 30 kw) made by ADACHI KIKO CO., LTD., and vigorously blown against the chromium-supported porous material (B-1) to supply hot air. The oxygen concentration in the pyrolysis furnace was controlled in a range of 6 vol% or more and less than 15 vol%. The temperature in the furnace was controlled to 490°C, and the heat treatment was performed for 20 minutes. Changes in the temperature in the furnace were evaluated at the temperature of the center under the back sheet 4 of the solar cell module 3.

### [Example 2]

The same heat treatment as in Example 1 was performed using a stainless steel lattice spacer having a lattice interval of 160 mm and a height of 20 mm as the spacer member 8 instead of the stainless steel lattice spacer used in Example 1.

### [Example 3]

The same heat treatment as in Example 1 was performed using a stainless steel lattice spacer having a lattice interval of 160 mm and a height of 30 mm instead of the stainless steel lattice spacer used in Example 1.

### [Comparative Example 1]

The same heat treatment as in Example 1 was performed except that a stainless steel lattice spacer was not used.

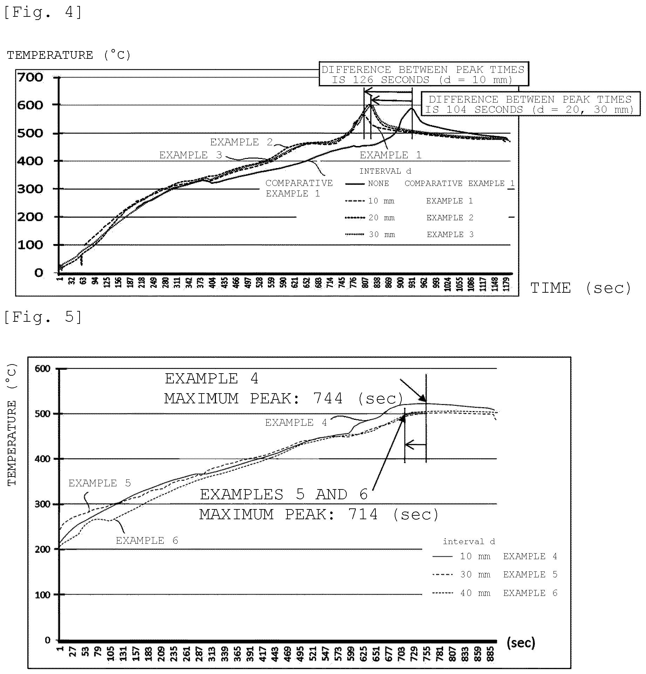

Fig. 4 illustrates changes in temperature in the furnace with respect to the heating time in the heat treatment in Examples 1 to 3 and Comparative Example 1.

In all of Examples, peaks of the temperature in the furnace caused by combustion were observed. However, when differences between peak times in Examples 1 to 3 in which the predetermined gap was provided and a peak time in Comparative Example 1 in which no gap was provided were evaluated, it was found that the time at which a peak occurred in the temperature in the furnace in each of Examples was earlier than that in Comparative Example 1. Specifically, the peak time in Example 1 was earlier by 126 seconds than that in Comparative Example 1, the peak time in Examples 2 and 3 was earlier by 104 seconds than that in Comparative Example 1 in which no gap was provided, and it was found that heating was completed in a short time and that the processing efficiency was high.

### [Example 4]

In Example 1, as the porous ceramic support 2, a ceramic filter (material: silicon carbide) with 7 ppi and 300 mm × 400 mm × 15 mmt manufactured by Nippon Crucible Co., Ltd. was used (this is referred to as a porous ceramic support (A-2)).

As the porous material 1 supporting the catalyst, a chromium-supported porous material (B-2) was prepared using a ceramic filter (product of Nippon Crucible Co., Ltd. (material: silicon carbide)) with 7 ppi and 300 mm × 400 mm × 45 mmt and using a chromium (III) oxide in the same manner as in Example 1. The mass of the chromium-supported porous material (B-2) was 2300 g before the coating and was 2859 g after the coating and the drying.

The chromium-supported porous material (B-2) and the porous ceramic support (A-2) were placed in the same manner as in Example 1. Further, a stainless steel lattice spacer (interval between grids: 160 mm, height: 10 mm) as the spacer member 8 was placed on the porous ceramic support (A-2) to provide a predetermined interval, and the solar cell module 3 was placed on the lattice spacer such that the back sheet 4 was on the lower side.

A gas furnace was used as the pyrolysis furnace. The gas was supplied by squeezing with a slit from the lower side of the pyrolysis furnace section used in Example 1, and vigorously blown against the chromium-supported porous material (B-2) to supply hot air. Without controlling the oxygen concentration in the pyrolysis furnace, the temperature in the furnace was controlled to 500°C, and the heat treatment was performed for 15 minutes.

### [Example 5]

The same heat treatment as in Example 4 was performed using a stainless steel lattice spacer (having a lattice interval of 160 mm and a height of 30 mm) as the spacer member 8 instead of the stainless steel lattice spacer used in Example 4.

### [Example 6]

The same heat treatment as in Example 4 was performed using a stainless steel lattice spacer (having a lattice interval of 160 mm and a height of 40 mm) as the spacer member 8 instead of the stainless steel lattice spacer used in Example 4.

Fig. 5 illustrates changes in temperature with respect to heating time in a heating step in Examples 4 to 6.

As a result, it was found that in Example 4 in which the gap was 10 mm, the time at which the peak became maximum was earlier by 30 seconds than in Examples 4 and 5. Changes when the gaps of 30 mm and 40 mm are provided are the same, and it is considered that the changes are the same even if the gap is further increased.

Based on this, it is considered that even when the interval is increased, the volume of air hitting the solar cell module does not change, and there is no difference in thermal decomposition time, and it has been found that it is highly meaningful to provide an optimal interval.

### Reference Signs List

- 1: porous material
- 2: porous ceramic support
- 3: solar cell module
- 4: back sheet
- 5: sealing resin layer
- 6: cell
- 7: tempered glass
- 8: spacer member
- 9: lifting member

## Claims

1. A method for continuously processing a waste solar cell, the method comprising a heating step of heating a solar cell module (C) including a resin back sheet and a sealing resin layer in a pyrolysis furnace to melt and oxidatively decompose a resin component included in the solar cell module (C), wherein
in the heating step, in a state in which the solar cell module (C) is placed above a porous ceramic support (A) so as to be separated from the porous ceramic support (A), and the porous ceramic support (A) is stacked on a porous material (B) supporting a transition metal oxide, hot air is sent from a porous material (B) side to insides of the porous material (B) and the porous ceramic support (A) and to a gap between the solar cell module (C) and the porous ceramic support (A).

2. The method for processing a waste solar cell according to claim 1, wherein the solar cell module (C) and the porous ceramic support (A) are separated from each other by installing a spacer member between the porous ceramic support (A) and the solar cell module (C) or installing, at an upper part of the pyrolysis furnace, a lifting member for lifting the solar cell module (C).

3. The method for processing a waste solar cell according to claim 1, wherein the gap between the solar cell module (C) and the porous ceramic support (A) is in a range of 3 to 50 mm.

4. The method for processing a waste solar cell according to claim 1, wherein the number of cells on each of surfaces of the porous ceramic support (A) and the porous material (B) is in a range of 5 to 50 pixels per inch (hereinafter abbreviated as "ppi").

5. The method for processing a waste solar cell according to claim 1, wherein a network structure for preventing falling is installed under the solar cell module (C).

6. The method for processing a waste solar cell according to any one of claims 1 to 5, wherein a valuable material is recovered after the heating step.
